# EUROPEAN PATENT SPECIFICATION

(11) **EP 4 154 127 B1**
(45) Date of publication and mention of the grant of the patent: **16.04.2025**
(21) Application number: 20746638.4
(22) Date of filing: 27.07.2020
(51) Int. Cl.: G06F 16/901, G06F 16/242

(54) **A DATABASE MANAGEMENT SYSTEM AND METHOD**
DATENBANKVERWALTUNGSSYSTEM UND -VERFAHREN
SYSTÈME ET PROCÉDÉ DE GESTION DE BASE DE DONNÉES

(43) Date of publication of application: 29.03.2023
(73) Proprietor: Huawei Technologies Co., Ltd., Longgang District, Shenzhen, Guangdong 518129 (CN)
(72) Inventor: MARTINEZ, Norbert, 80992 Munich (DE)
(74) Representative: MERH-IP Matias Erny Reichl Hoffmann Patentanwälte PartG mbB
(86) International application number: PCT/EP2020/071121
(87) International publication number: WO 2022/022802

(56) References cited:
- US-A1- 2018 121 501
- US-A1- 2019 286 662
- US-A1- 2020 226 156

## Description

### TECHNICAL FIELD

The present disclosure relates to database systems. More specifically, the present disclosure relates to a database management system and method.

### BACKGROUND

Relational databases managed by relational database management systems (RDBMS) are the most popular way to store structured data. In relational databases, data is organized in the form of tables comprising rows and columns.

A graph is a structure (diagram) comprising entities called vertices (or nodes or points) and edges (or links or relationships), wherein the edges (or links or relationships) are related pairs of vertices. In the Property Graph Model, data is organized as nodes, relationships, and properties, wherein the properties are data values stored on the nodes or relationships. By converting relational data into a property graph, it is possible to explore (traverse) the relationships between the entities (rows) and to analyze the underlying network topology.

Querying graphs on existing relational data is usually done using one of the following three approaches.

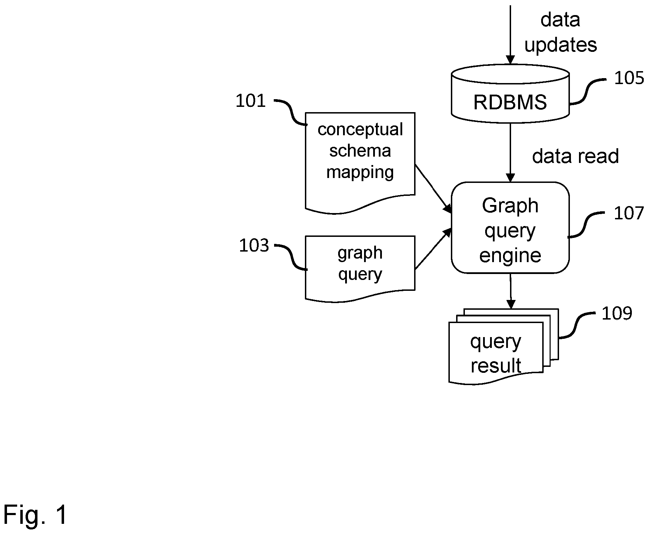

According to a first approach illustrated in figure 1, a graph query engine 107 extracts, in response to a graph query 103, relational data directly from a database 105. The graph query engine 107 transforms rows of the extracted relational data into vertices and edges of a graph on-the-fly using a conceptual schema mapping 101. The conceptual schema mapping 101 defines a relationship between the relational schema, i.e. the structure of the data in the relational database in the form of tables with rows and columns, and the graph schema, i.e. the structure of the data in the graph in the form of vertices, edges and properties. Finally, the graph query engine 107 provides query results 109 of the graph query 103.

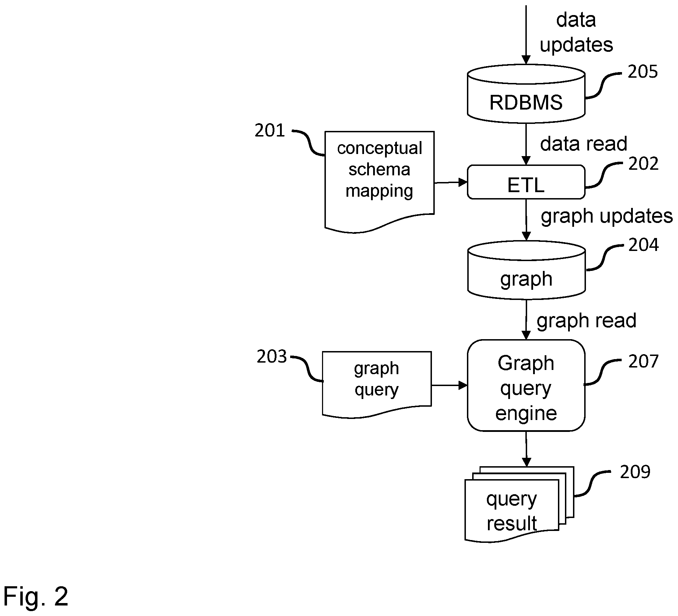

According to a second approach illustrated in figure 2, an extract-transform-load (ETL) process 202 reads relational data from a database 205 and, by using a conceptual schema mapping 201, generates and stores inferred vertices and edges into a graph database or graph storage 204. In response to a graph query 203, the graph query engine 207 then reads vertices and edges directly from the generated graph stored in the graph storage 204 and provides query results 209 of the graph query 203.

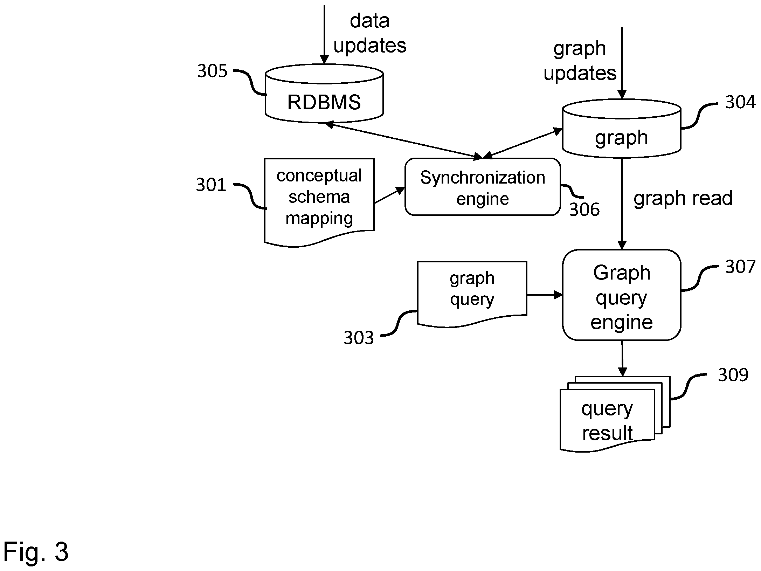

According to a third approach illustrated in figure 3, a synchronization engine 306 maintains a graph database or graph storage 304 that is always updated with the latest changes of the relational data in the database 305 by using a conceptual schema mapping 301. In response to a graph query 303, the graph query engine 307 reads vertices and edges directly from the graph provided by the graph database 304 as in the second approach described above and provides query results 309 of the graph query 303.

As will be appreciated, the third approach is more sophisticated and, thus, more difficult to implement than the second approach, while the second approach, in turn, is more sophisticated and, thus, more difficult to implement than the first approach. Moreover, while the first approach is capable of reading, transforming, and querying data on-the-fly, the other two approaches require the materialization of the generated graph data into an extra graph repository 204, 304, which, in practical terms, means a duplication of the data storage capacities.

Similar to the above three approaches, document US 2019/286662 A1 discloses a mapping process that prepares for and executes a graph query against a relational database, wherein a mapping of relational tables to node tables and edge tables that define a graph is received, and based on an execution of a query of the graph, values of desired columns/rows of desired node tables are returned.

Besides, current approaches only employ simple schema mapping with vertices and edges directly mapped in a one-to-one relationship to rows of relational tables. Thus, the above approaches have one or more of the following disadvantages: (i) the relational data has to be duplicated into the graph storage; (ii) the extraction and synchronization (for providing consistency) between relational and graph data takes time and does not allow for real-time processing of the latest updates; and/or (iii) the schema mapping used in current approaches is very simple and often not very useful in practical terms. Moreover, with the current approaches, when designing a database, it is necessary to use and implement simple relational models that can be easily mapped to a graph model, or to prepare sophisticated ETL procedures that are executed periodically to convert relational data into graph entities.

### SUMMARY

It is an objective of the present disclosure to provide an improved database management system and method.

The foregoing and other objectives are achieved by the subject matter of the independent claims. Further implementation forms are apparent from the dependent claims, the description, and the figures.

According to a first aspect, a database management system for managing a database is provided. The database management system comprises a processor configured to receive a definition of at least one of a graph vertex and a graph edge of data of the database, generate a schema mapping rule, based on the definition of the at least one of the graph vertex and the graph edge of the data of the database, wherein the schema mapping rule defines a correspondence between the data of the database and a graph representation of the data of the database, wherein the graph representation includes the at least one of the graph vertex and the graph edge of the data of the database, and generate, based on the schema mapping rule, a database query for extracting one or more further graph vertices and/or graph edges of the data of the database.

As used herein and as will be described in more detail below, a definition of a graph vertex and/or a graph edge of the data of the database may comprise one or more instructions allowing the database management system to generate one or more graph vertices and/or graph edges from the data of the database.

In a further possible implementation form of the first aspect, the processor is further configured to generate the schema mapping rule as a conjunctive and/or disjunctive combination of one or more predicates.

In a further possible implementation form of the first aspect, the processor is further configured to store the database query in a database catalog of the database.

In a further possible implementation form of the first aspect, the processor of the database management system is further configured to extract the one or more further graph vertices and/or graph edges of the data of the database based on the database query stored in the database catalog. Advantageously, this allows extracting non-explicit information hidden in the relational representation of the data of the database.

In a further possible implementation form of the first aspect, the processor is further configured to provide a programming interface, wherein the programming interface is configured to receive one or more programming instructions for at least one of extracting the data from the database and/or defining the at least one of the graph vertex and the graph edge of the data of the database.

In a further possible implementation form of the first aspect, the one or more programming instructions of the programming interface comprises a first programming instruction (herein referred to as a "MATCH" instruction) for extracting the data from the database or from the graph representation of the data of the database.

In a further possible implementation form of the first aspect, the first programming instruction for extracting data from the database, i.e. the "MATCH" instruction is configured to define the at least one of the graph vertex and the graph edge of the data of the database by recursive reference to the schema mapping rule. In other words, the output of a "MATCH" instruction can be the input of another "MATCH" instruction.

In a further possible implementation form of the first aspect, the one or more programming instructions of the programming interface comprises a second programming instruction (herein referred to as a "COMPARE" instruction) for filtering the data of the database on the basis of one or more comparison predicates.

In a further possible implementation form of the first aspect, the one or more programming instructions of the programming interface comprises a third programming instruction (herein referred to as an "AGGREGATE" instruction) for determining one or more aggregate functions over the data of the database.

In a further possible implementation form of the first aspect, the one or more programming instructions of the programming interface comprises a fourth programming instruction (herein referred to as a "EXCEPT" instruction) for discarding or filtering the data of the database matching one or more criteria.

In a further possible implementation form of the first aspect, the one or more programming instructions of the programming interface comprises a fifth programming instruction (herein referred to as a "EVAL" instruction) for evaluating one or more pre-defined functions or predicates.

In a further possible implementation form of the first aspect, the database management system further comprises the database.

According to a second aspect, a method for managing a database is provided. The method comprises the steps of receiving a definition of at least one of a graph vertex and a graph edge of data of the database, generating a schema mapping rule, based on the definition of the at least one of the graph vertex and the graph edge of the data of the database, wherein the schema mapping rule defines a correspondence between the data of the database and a graph representation of the data of the database, wherein the graph representation includes the at least one of the graph vertex and the graph edge of the data of the database, and generating, based on the schema mapping rule, a database query for extracting one or more further graph vertices and/or graph edges of the data of the database.

In a further possible implementation form of the second aspect, the step of generating the schema mapping rule comprises generating the schema mapping rule as a conjunctive and/or disjunctive combination of one or more predicates.

In a further possible implementation form of the second aspect, the method further comprises the step of storing the database query in a database catalog of the database.

In a further possible implementation form of the second aspect, the method comprises the further step of extracting the one or more further graph vertices and/or graph edges of the data of the database based on the database query stored in the database catalog.

In a further possible implementation form of the second aspect, the method further comprises a step of providing a programming interface, wherein the programming interface is configured to receive one or more programming instructions for defining the at least one of the graph vertex and the graph edge of the data of the database.

The database management method according to the second aspect of the present disclosure can be performed by the database management system according to the first aspect of the present disclosure. Thus, further features of the data management method according to the second aspect of the present disclosure result directly from the functionality of the database management system according to the first aspect of the present disclosure as well as its different implementation forms described above and below.

According to a third aspect, a computer program product storing program code which causes a computer or a processor to perform the method according to the second aspect, when the program code is executed by the computer or the processor, is provided.

As will be described in more detail in the following, embodiments of this disclosure provide a rule-based domain specific language (DSL) for conceptual schema mapping that describes, i.e. defines how to: (i) transform, using plain structured query language (SQL), relational data to graph data (R2G) including direct mapping (e.g. row-to-vertex and row-to-edge), generalizations/specializations, hierarchical, and denormalized relational schemas; and (ii) infer new relationships from existing data, including nested relationships and recursive relationships. Moreover, embodiments of this disclosure provide a rule-based mapping engine for graphs based on logical programming and only five predicate types (operations) that transforms graph queries into relational SQL queries over persistent relational data without a need for redundant graph storage. The DSL may be any declarative programming language that allows the definition of mappings using predicates such as Datalog, or an extension to the SQL Data Definition Language (DDL) as described above.

Embodiments of this disclosure provide, amongst others, the following advantages: (i) there is no need to duplicate relational data as graph data; (ii) relationships are inferred on-the-fly from the most updated data without delays due to the ETL or synchronization process; (iii) a (SQL-like) DSL simplifies the maintenance of the conceptual schema mapping; (iv) more complex mappings than direct table to vertex/edge mappings between relational and graph data can be expressed; (iv) new relationships can be derived from data, including nested and recursive relationships; (v) no substantial changes of the current infrastructure of a RDBMS are needed because standard SQL logic may be used; and (vi) a modular framework is provided that can be integrated into other frameworks, where the source is relational data and the destination is graph data ready for interactive graph queries of rules that specify how to transform relational schemas into graph schemas, and generates the corresponding relational queries (SELECT, VIEW, CTE or UDF), wherein these queries can be stored in the database catalog to be used later by the graph query engine.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:
Fig. 1 is a schematic diagram illustrating a first known database management system;
Fig. 2 is a schematic diagram illustrating a second known database management system;
Fig. 3 is a schematic diagram illustrating a third known database management system;
Fig. 4a is a schematic diagram illustrating a database management system according to an embodiment;
Fig. 4b is a schematic diagram illustrating more details of the database management system of figure 4a;
Fig. 5 illustrates processing steps implemented by the database management system of figures 4a and 4b;
Fig. 6 illustrates exemplary extensions of the SQL language implemented by a database management system according to an embodiment;
Fig. 7 is an exemplary table for illustrating different aspects of a database management system according to an embodiment;
Fig. 8 is a diagram illustrating inherent relations in the table of figure 7 as determined by a database management system according to an embodiment;
Fig. 9 is a diagram of an exemplary Enhanced Entity Relationship (EER) relational schema of a social network for illustrating different aspects of a database management system according to an embodiment; and
Fig. 10 is a flow diagram illustrating steps of a database management method according to an embodiment.

In the following, identical reference signs refer to identical or at least functionally equivalent features.

### DETAILED DESCRIPTION OF EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

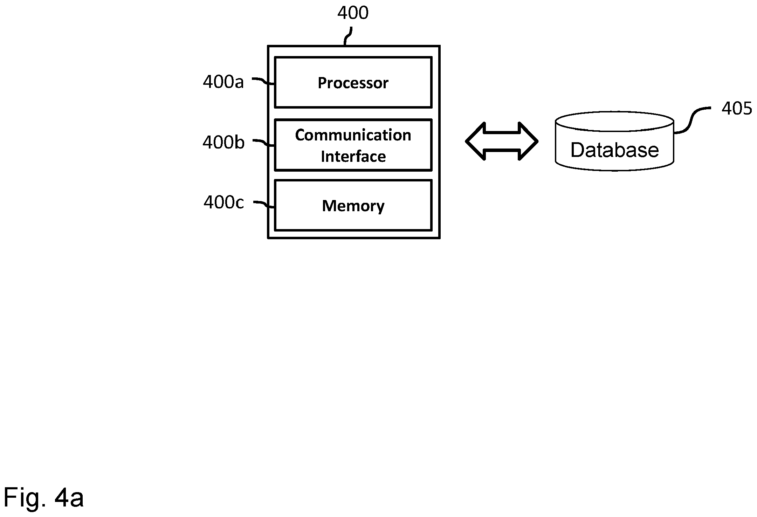

Figure 4a is a schematic diagram of a possible high-level architecture of a database management system 400 according to an embodiment, which is configured to interact with a database 405. As illustrated in figure 4a, the database management system 400 may comprise a processor 400a for processing data, a communication interface 400b for exchanging data with the database 405, and a memory 400c for storing data. The processor 400a of the database management system 400 may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The memory 400c may store data, such as executable program code which, when executed by the processor 400a, causes the processor 400a to perform the functions, operations and methods described herein, in particular implement one or more software-implemented engines, which will be described in more detail below. The memory 400c may comprise a non-transitory memory portion for storing persistent data and/or a volatile memory portion for storing volatile data.

In the embodiment shown in figure 4a, the database 405 is external to the database management system 400. In a further embodiment, the database 405 may be embedded within the database management system 400, e.g. within the memory 400c of the database management system 400.

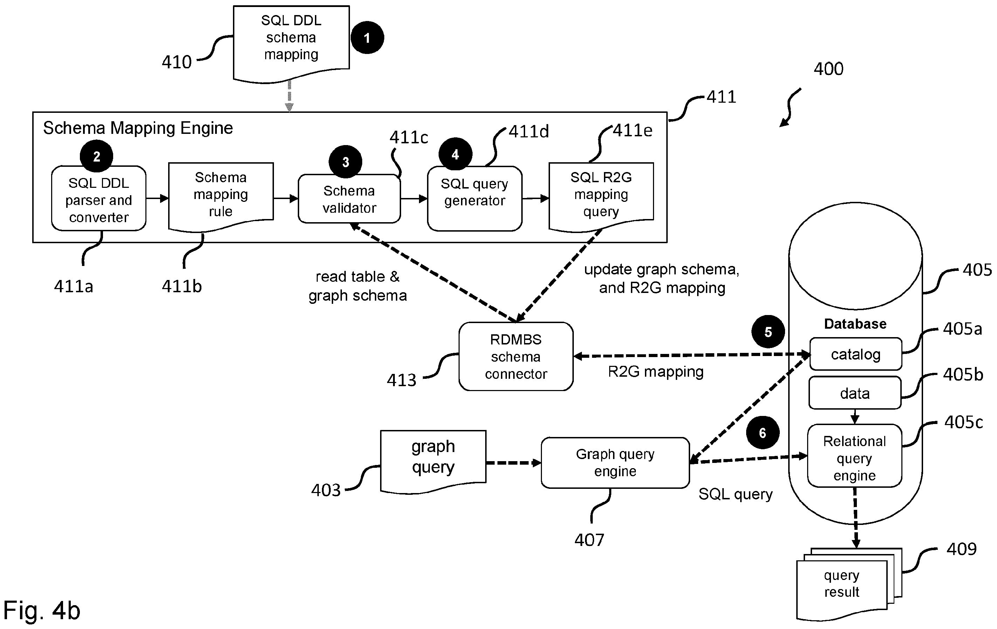

Figure 4b is a schematic diagram illustrating further details of the database management system 400 of figure 4a. In an embodiment, the database management system 400 may be configured to implement, for instance, by means of the processor 400a, one or more of the components illustrated in figure 4b in software, such as a schema mapping engine 411, a RDBMS schema connector 413, a graph query engine 407, and a relational query engine 405c.

The database management system 400 shown in figure 4b comprises and/or implements, for instance, by means of the processor 400a, three main components that are integrated into a generic architecture, namely (i) a rule-based DSL (domain-specific language) that allows to specify, i.e. define a conceptual mapping between relational and graph models, (ii) the RDBMS schema connector 413 configured to extract and maintain relational and graph catalogs 405a from the RDBMS database 405, and (iii) the schema mapping engine (SME) 411 configured to generate relational queries from the DSL specification that will be used by the graph query engine 407 to execute a graph query 403. As already described above, in an embodiment, the schema mapping engine 411 may be implemented by the processor 400a of the database management system 400 shown in figure 4a.

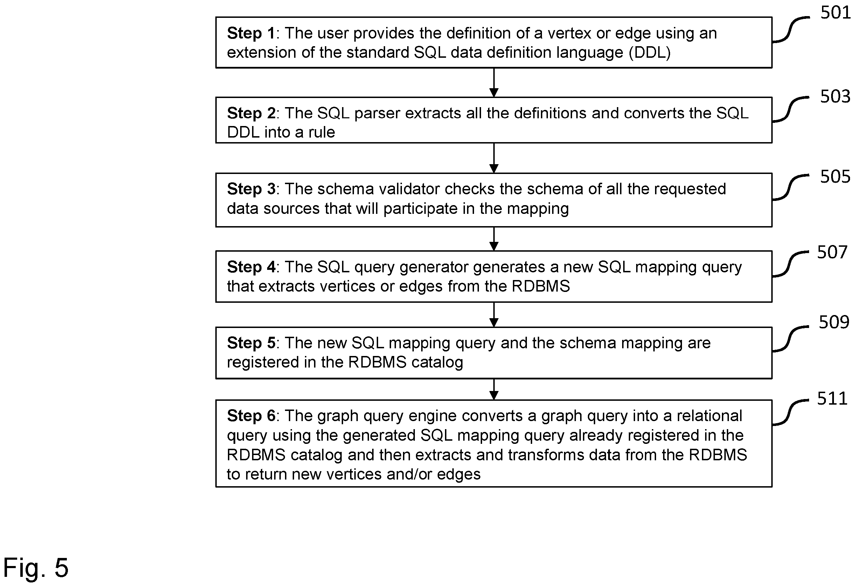

More specifically, the schema mapping engine 411 implemented by the processor 400a is configured to generate a schema mapping rule 411b based on a SQL data definition language (DDL) definition 410 (referred to as "SQL DDL schema mapping" in figure 4b) of a graph vertex and/or a graph edge of data of the database 405. The schema mapping rule 411b maps data, e.g. tables or rows of the database 405, to a graph representation of the data of the database 405, including a plurality of graph vertices and a plurality of graph edges. Moreover, the schema mapping engine 411 is configured to generate, based on the schema mapping rule 411b, a database query 411e used by the relational query engine 405c for extracting one or more graph vertices and/or graph edges 409 from the database data 405b. As will be described in more detail below with respect to figure 5, in the embodiment shown in figure 4b, the schema mapping engine 411, which may be implemented by the processor 400a of the database management system 400, comprises a SQL DDL (data definition language) parser and converter 411a, a schema validator 411c, and a SQL query generator 411d.

The database management system 400 shown in figure 4b differs from the conventional database management systems 100, 200, 300 shown in figures 1, 2, and 3 in particular with respect to the following aspects. In comparison with the simple conceptual schema mapping implemented by the database management system 100 shown in figure 1, the database management system 400 shown in figure 4b allows the definition of complex relationships by generating a SQL query based on definitions specified using extensions to the standard SQL DDL. Moreover, in comparison with the ETL extraction implemented by the database management systems 200, 300 of figures 2 and 3, the database management system 400 shown in figure 4b does not require storing the inferred vertices and edges in an additional graph storage. This saves storage resources and allows real-time inference that includes the most recent updates in the relational data.

Figure 5 illustrates the processing flow for the database management system 400 of figure 4b.

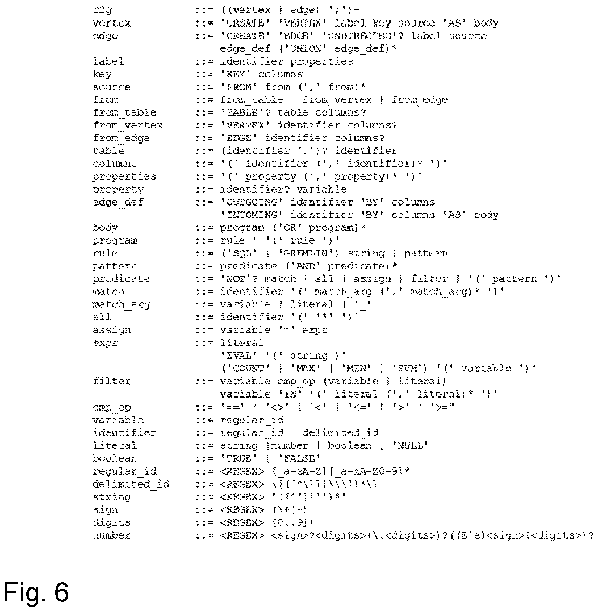

In step "1" 501, a user (database administrator or database programmer) may specify new vertex or edge definitions by means of a SQL DDL schema mapping 410 using extensions to the standard SQL language as, for example, the exemplary extension illustrated in figure 6, which will be described below. The SQL mapping extension illustrated in figure 6 is based on three concepts: (i) references to existing tables into the relational schema as a data source; (ii) references to already defined vertex and edge mappings as a data source; and (iii) predicates that specify how to do the transformation from the referenced sources (tables, vertices and edges) into new vertices or edges.

In step "2" 503, the SQL DDL parser and converter 411a shown in figure 4b extracts all the definitions from the SQL DDL schema mapping 410, identifies all data sources (tables, vertices or edges) and generates an equivalent rule, namely the schema mapping rule 411b, in a conjunctive form of one or more predicates, similar to the Prolog or Datalog programming languages.

In step "3" 505, the schema validator 411c shown in figure 4b matches through the RDBMS schema connector 413 the data sources with the existing tables and mappings into the database catalog 405a and validates the mapping correctness.

In step "4" 507, the SQL query generator 411d shown in figure 4b generates a new SQL R2G mapping query (SELECT, VIEW, CTE, or UDF) 411e based on the expected input data sources and the schema mapping rule 411b.

In step "5" 509, the RDBMS schema connector 413 registers the vertex or edge mapping and the SQL R2G mapping query 411e in the database catalog 405a.

In step "6" 511, the SQL R2G mapping query 411e may be used by the graph query engine 407 to execute in the relational query engine 405c a graph query 403 that extracts vertices and/or edges on-the-fly from existing data into the database 405 and provides a query result 409.

Steps "5" and "6" may be implemented using already existing tools for converting graph queries into relational queries.

In an embodiment, the query evaluation of rules as implemented by the database management system 400 may be based on first-order logic (predicate logic). In an embodiment, there is a valid result for the rule for each combination of inputs (data sources) that match all the predicates in the rule. In a rule, each predicate has a name and a list of arguments. An argument can be, for instance, a constant value (number, character string, and the like), a variable name (a symbolic name associated with a value) or a predefined enumerated type. If a variable name appears at the same time in two or more predicates, then it may contain the same value for all the predicates at a specific instant of time. In an embodiment, it is further possible to use a union (combination) of one or more disjoint rules in order to express different ways to map one or more sources to the same vertex or edge definition.

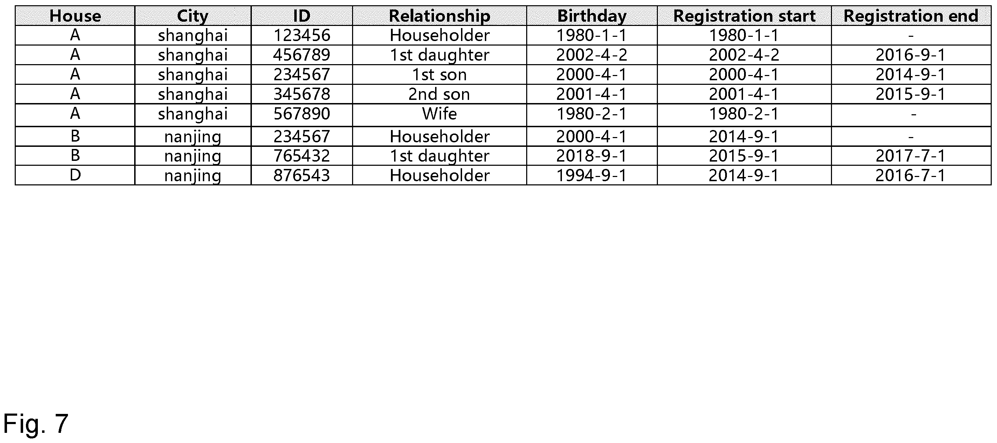

Figure 7 shows an example of a relational table containing exemplary household registration data. By way of example, the table of figure 7 comprises the following columns: "House", "City", "ID", "Relationship", "Birthday", "Registration start", and "Registration end", wherein each column has eight rows.

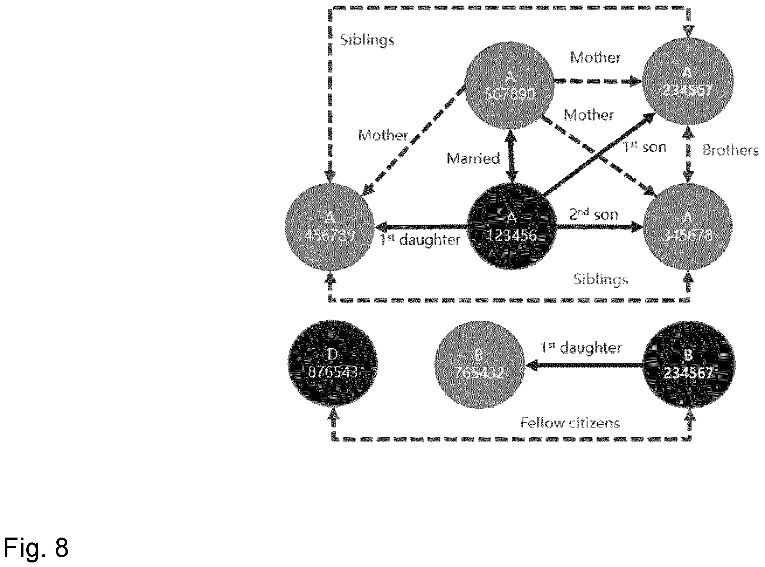

Figure 8 shows the property graph inferred from the table of figure 7. As will be appreciated, some relationships are directly extracted from the table (e.g. wife), while others require inference based on nested relationships (e.g. son of wife or sibling). In figure 8, solid-line relationships are explicit in the data and dotted-line relationships are implicit and must be inferred.

The database management system 400 allows implementing mappings between a relational schema and a property graph covering everything from simple scenarios, such as strong (strict) schema, where relations are directly vertices and edges (explicit, e.g. wife), up to free schema or complex use cases, where vertices and edges are derived from existing data using multiple composite or recursive predicates (inferred, e.g. sibling). In an embodiment, the database management system 400 implements one or more of the following rules and schemes.

In an embodiment, the database management system 400 may implement a strong (strict) schema, where there is a relation for each vertex label and for each edge label. In this case, the relational schema may be normalized in first normal form (1NF) where (i) there is a separate table for each relation, (ii) each set of related data is identified with a primary key, and (iii) each attribute contains only atomic (indivisible) values. Migration of attributes of 1:1 and 1:N relationships are also in 1NF, but, in this case, an edge is defined in the same relation as one of the participating vertices.

In an embodiment, the database management system 400 may implement a denormalized relational schema, when, for example, the relational schema is not in second normal form (2NF) (without partial dependencies) or in third normal form (3NF) (without transitive dependencies) because of a performance-oriented design or by constraints imposed by the application. An example is when a single relation contains attributes that should be split into multiple relations.

In an embodiment, the database management system 400 may implement object-oriented schemas, such as generalizations or specializations of Enhanced Relational Models (EER), where common characteristics of different entities (specializations or subtypes or subclasses) are stored in a common relation called superclass or supertype. Each subclass contains a reference (sometimes weak) to the superclass and its own attributes. In this kind of mapping, inheritance of attributes appears from the superclass and relationships to superclasses that are extended to all of the subclasses. The mapping also forces each vertex in the subclass to have all the labels of the inheritance hierarchy tree.

In an embodiment, the database management system 400 may implement a hierarchical query, which is a form of recursive query that retrieves a hierarchy. It returns the rows of the result set in a hierarchical order based upon data forming a parent-child relationship. Hierarchies in relational data are typically represented by inverted tree structures.

In an embodiment, the database management system 400 may implement nested relationships, i.e. relationships that can be derived as a combination of other inferred relationships, in the same way as nested queries. One classical example is relatives or distant relatives such as grandparents or siblings that can be inferred from a simple family tree that only contains direct relative relationships.

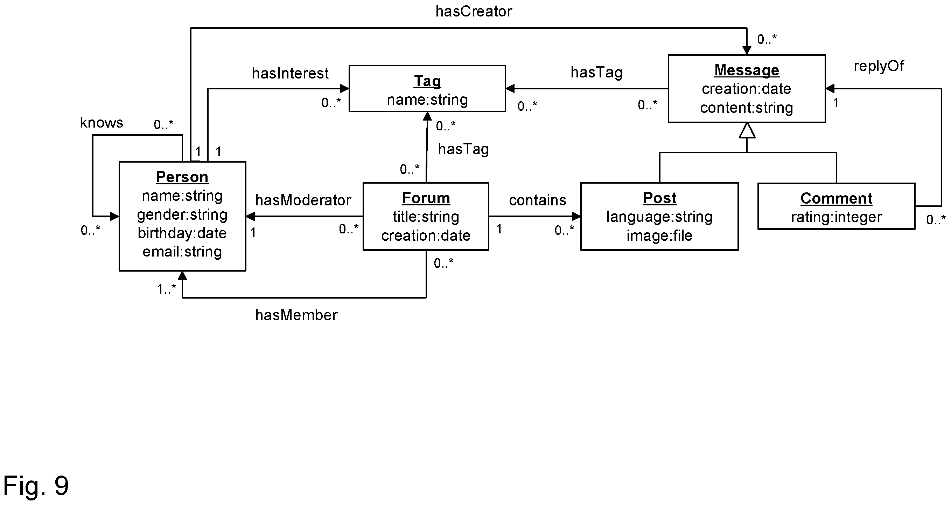

Figure 9 shows the EER relational schema of a social network that includes generalized vertices, such as "Message", specialized vertices of "Message" as "Post" and "Comment", each with different properties, and relationships to a superclass such as "replyOf" to "Message". Thus, instead of defining graph relationships based only on a strict mapping of the relational schema to the graph schema, with a schema implemented by the database management system 400, new edges can be obtained with the evaluation of one or more graph queries, including recursion.

In an embodiment, the database management system 400 may be configured to query and analyze graphs using one or more of the following frameworks: Property Graph Databases (PGDBMS), Graph Analytical Frameworks, RDF/SPARQL, Graph Streaming, and the like. The conversion between relational data and graph data may be done logically, as part of the query process, or physically by duplicating the original relational data into graph vertices and edges. A conceptual schema mapping may be used to define how to convert from relational model to graph, and vice versa.

In an embodiment, the schema mapping engine 411 is configured to provide a programming interface, wherein the programming interface is configured to receive one or more programming instructions (also referred to as predicates) for extracting data 405b from the database 405 and/or defining a graph vertex and/or a graph edge of the graph representation of the data 405b of the database 405.

In an embodiment, the one or more programming instructions of the programming interface comprises a first programming instruction, herein referred to as a "MATCH" instruction, for extracting data 405b from the database 405 or from the graph representation of the data 405b of the database 405. In an embodiment, the "MATCH" instruction for extracting data from the database 405 is configured to define a graph vertex and/or a graph edge of the graph representation of the data 405b of the database 405 by recursive reference to the schema mapping rule 411b. In an embodiment, the "MATCH" instruction may be defined as follows:
- MATCH(T,S, [C₁:V₁,...,Cₙ:Vₙ]) - given source S of type T (*table, vertex, edge, self*), returns each distinct tuple with the value of each column (or vertex or edge property) Ci of S into Vi, where all Ci matches all the other predicates in the rule. The data source type *self* is for recursive calls of the rule to itself.

In an embodiment, the one or more programming instructions of the programming interface comprises a second programming instruction, herein referred to as a "COMPARE" instruction, for filtering data 405b of the database 405 on the basis of one or more comparison predicates. In an embodiment, the "COMPARE" instruction may be defined as follows:
- COMPARE(V,C,K | W) - returns the logical comparison C (equality or inequality) between variable V and the constant value K or variable W

In an embodiment, the one or more programming instructions of the programming interface comprises a third programming instruction, herein referred to as an "AGGREGATE" instruction, for determining one or more aggregate functions over data of the database. In an embodiment, the "AGGREGATE" instruction may be defined as follows:
- AGGREGATE(V,A,W) - computes the aggregate function A over all matching values of W, and returns the result into V. An aggregate function can be the number (count) of matches, sum or the average of all values, the minimum or maximum value, etc.

In an embodiment, the one or more programming instructions of the programming interface comprises a fourth programming instruction, herein referred to as a "EXCEPT" instruction, for discarding data of the database or data from the graph representation of the data matching one or more criteria. In an embodiment, the "EXCEPT" instruction may be defined as follows:
- EXCEPT(T,S, [C₁V₁,..., CₙVₙ]) - given source S of type T (same as for MATCH), discards all combinations of values Vi for column (or vertex or edge property) of S, where all Ci match the corresponding Vi.

In an embodiment, the one or more programming instructions of the programming interface comprises a fifth programming instruction, herein referred to as a "EVAL" instruction, for evaluating one or more pre-defined functions or predicates. In an embodiment, the "EVAL" instruction may be defined as follows:
- EVAL(V,E[W₁,...,Wₙ]) - evaluates an expressions with arguments Wi (constant values or variables) and built-in or used-defined operations, and returns the result into variable V

Thus, the "MATCH" instruction may be used to define how to access data sources such as a table or an existing vertex and edge mapping. The "COMPARE" instruction may filter data based on comparison predicates such as equality, inequalities or existence into a set of values. The "AGGREGATE" instruction may be used to compute aggregate functions over the data, such as counting occurrences or finding maximum or minimum values. The "EXCEPT" instruction may be used to discard occurrences that do match some criteria. The "EVAL" instruction allows for the evaluation of built-in predicates provided by each specific RDBMS, for example to extract the year from a date. A particular case is recursion that can be achieved by nested rules.

In the following, the above five programming instructions provided by the programming interface of the schema mapping engine 411 for extracting data 405b from the database 405 and/or defining a graph vertex and/or a graph edge of the graph representation of the data 405b of the database 405 will be described in more detail in the context of the examples shown in figures 7, 8, and 9.

For the relational table shown in figure 7 containing household registration data, the relational schema may be defined as follows:
Household(House VARCHAR, City VARCHAR, ID INT, Relationship VARCHAR, Birthday DATE, Registration_start DATE, Registration_end DATE)

A graph with different vertex and edge mappings may be defined using the programming instructions described above in the following way.

A vertex for each person (simple MATCH) may be defined as follows:
Person(id I, birthday B) :-
MATCH(TABLE, Household, [I:ID, B:Birthday])

A vertex for each house (a different MATCH to the same table) may be defined as follows: House(house H, city C) :-
MATCH(TABLE, Household, [H:House, C:City])

An edge for each householder (simple MATCH with filter) may be defined as follows: Householder(id I, house H) :-
MATCH(TABLE, Household, [I:ID, H:house, R:Relationship])
COMPARE(R,<EQUAL>,'Householder')

An edge for each wife of a householder (inference) may be defined as follows: Wife(id I, wife W) :-
MATCH(TABLE, Household, [W:ID, H:House, R:Relationship])
COMPARE(R,<EQUAL>,'Wife')
MATCH(EDGE, Householder, [I:id, H: house])

An edge for each mother (inference) may be defined as follows:
Mother(id I, mother M) :-
MATCH(TABLE, Household, [I:ID, H:House, R:Relationship])
COMPARE(R,<IN>,{'Son','Daughter'})
MATCH(TABLE, Household, [F:ID, H:House])
MATCH(EDGE, Wife, [F:id, M:wife])

An edge for each grandmother (nested inference) may be defined as follows: Grandmother(id I, grandmother G) :-
MATCH(EDGE, Mother, [I:id, M:mother])
MATCH(EDGE, Mother, [M:id, G:mother])

A vertex for each bachelor householder (no wife, inference) may be defined as follows: Bachelor (id I, city C) :-
MATCH(EDGE, Householder, [I:id, H:house])
EXCEPT(EDGE, Wife, [I:id])
MATCH(VERTEX, House, [H:house, C:City])

An edge for each family with children (aggregate) may be defined as follows:
Family (id I, wife W, child N) :-
MATCH(EDGE, Wife, [I:id, W:wife])
MATCH(EDGE, Mother, [C:id, W:mother])
AGGREGATE(C, <COUNT>, N)
COMPARE(N, <GREATER_THAN >, 0)

A vertex for each baby (built-in expression) may be defined as follows:
Baby(mother M, child I) :-
MATCH(EDGE, Mother, [C:id, W:mother])
MATCH(VERTEX, Person, [C:id, B:birthday])
EVAL(Y, 2020-year(B))
COMPARE(Y, <LESS_THAN >, 1)

The following examples show the complete flow of inference of one vertex type and one edge type.

The database management system 400 may use an extension of SQL DDL to define how to extract people, houses, and how to link householders with houses and wives with householders from the relational table shown in figure 7 in the following way.
-- people
CREATE VERTEX person(id I, birthday B)
   KEY(id)
   FROM TABLE Household(ID, Birthday) HH
   AS HH(I, B);
-- house
CREATE VERTEX house(house H, city C)
   KEY(house)
   FROM TABLE Household(House, City) HH
   AS HH(H, C);
-- householder
CREATE EDGE householder(id I, house H)
   FROM TABLE Household(ID, House, Relationship) HH
   OUTGOING person BY (id)
   INCOMING house BY (house)
   AS HH(I, H, R)
      AND R='Householder'
-- wives
CREATE EDGE wife(id I, wife W)
   FROM TABLE Household(ID, House, Relationship) HH,
      EDGE householder(id, house) HR
   OUTGOING person BY (id)
   INCOMING person BY (wife)
   AS HH(W, H, R)
      AND R='Wife'
      AND HR(I, H)

The following examples show the corresponding rules for the vertex and edge.
person(id I, birthday B) :-
   MATCH(TABLE, Household, [I:ID, B:Birthday])
house(house H, city C) :-
   MATCH(TABLE, Household, [H:House, C:City])
householder(id I, house H) :-
   MATCH(TABLE, Household, [I:ID, H:house, R:Relationship])
   COMPARE(R,<EQUAL>,'Householder')
wife(id I, wife W) :-
   MATCH(TABLE, Household, [W:ID, H:House,R:Relationship])
   COMPARE(R, <EQUAL>, 'Wife')
   MATCH(EDGE, householder, [I:id, H:house])

Finally, the following examples show the final SQL queries that will extract those vertices and edges from the database 405.
-- person
SELECT DISTINCT ID, Birthday
   FROM Household
-- house
SELECT DISTINCT House, City
   FROM Household
-- householder
SELECT DISTINCT ID, House
   FROM Household HH
   WHERE Relationship = 'Householder'
-- wife
SELECT DISTINCT HH1.ID, HH2.ID
   FROM Household HH1, Household HH2
   WHERE HH1.House = HH2.House
      AND HH2.Relationship = 'Wife'
      AND HH1.Relationship = 'Householder'

In the following, a further example is described, which merges data from two relational tables in order to create vertices that identify "female faculty members older than 25 years from Barcelona Universities".

A SQL-like definition of a new vertex (w_faculty) based on two relational data sources (Person and University) with some constraints (gender, age and location) may be defined as follows:
-- female faculty members older than 25 years from Barcelona Universities CREATE VERTEX w_faculty(id I, name N, age A)
   KEY(id)
   FROM TABLE Person(id, name, gender, birthday, universityld) T_P,
      TABLE Universitity(id, city) T_U
   AS T_P(I,N,G,B,U)
      AND T_U(U,C)
      AND G='F'
      AND C='Barcelona'
      AND A=EVAL(2019-year(B))
      AND A>25;

The schema of the relational data sources may be defined as follows:
University(id INT, name VARCHAR, city VARCHAR)
Person(id INT, name VARCHAR, gender CHAR[1], birthday DATE, address VARCHAR, universityld INT)

The logical rule that represents the vertex mapping for this example may be defined as follows:
w_faculty(I,N,A) :-
MATCH(TABLE,Person,[id:I,name:N,gender:G,birthday:B,universityld:U])
MATCH(TABLE,University,[id:U,city:C])
COMPARE(G,<EQUAL>,'F')
COMPARE(C,<EQUAL>,'Barcelona')
EVAL(A, 2019-year(B))
COMPARE(G,<GREATER_THAN>,25)

As already described above, figures 4b and 5 illustrate a processing flow implemented by the database management system 400, including the mapping from relational to graph written in the DSL, until the final relational query is generated.

As already described above, the schema mapping engine 411 may read a script provided by a database administrator or database programmer, parses and validates its content, and generates an intermediate data structure with the parse tree, for example an Abstract Syntax Tree (AST) or in-memory data structures. As already described above, an exemplary SQL DDL extension that covers all the requirements described above is illustrated in figure 6. In the following some exemplary mappings using the SQL-like DDL illustrated in figure 6 will be described, namely a very simple (strict vertex or edge) example as well as a more sophisticated example including negation, recursion and aggregates.

The schema mapping engine 411 may then extract all the data dependencies from the existing database relational tables or previously defined graph vertex and edge mappings. For example, the relational schema of four tables may be defined as follows:
University(id INT, name VARCHAR, city VARCHAR)
Person(id INT, name VARCHAR, gender CHAR[1], birthday DATE, address VARCHAR, universityld INT)
Paper(id INT, name VARCHAR, year INT, country VARCHAR)
Authorship(id INT, idPerson INT, idPatent INT, position INT)

The SQL-like script with the definition of two vertex (*author, paper*) and two edge (*authorship, is_coauthor*) mappings to those four tables may be defined as follows:
-- female faculty members younger than 30 years
CREATE VERTEX w_faculty(id I, city C, age A)
   KEY(id)
   FROM
      TABLE Person(id, gender, birthday,
         universityld) T_P,
      TABLE Universitity(id, city) T_U
   AS T_P(I,N,G,B,U)
      AND T_U(U,C)
      AND G='F'
      AND A=EVAL(2019-year(B))
      AND A<30;
-- papers
CREATE VERTEX paper(id I,name N,year Y)
   KEY(id)
   FROM TABLE Paper(id,name,year) PA
   AS PA(I,N,Y);
-- authorship
CREATE EDGE is_author(person P,paper A)
   FROM TABLE Authorship(idPerson,idPaper) T_AU
   OUTGOING person BY (person)
   INCOMING paper BY (paper)
   AS T_AU(P,A);
-- coauthorship of female faculty members,
-- younger than 30 years,
-- from the same city, with at least 5 papers since 2010 CREATE EDGE is_coauthor(person V,coauthor W,patents N)
   FROM VERTEX w_faculty,
      VERTEX paper,
      EDGE is_author
   OUTGOING w_faculty BY (person)
   INCOMING w_faculty BY (coauthor)
   AS is_author(V,P)
      AND is_author(W,P)
      AND V<>W
      AND paper(P,Y)
      AND Y>=2010
      AND w_faculty(V,C1,-)
      AND w_faculty(W,C2,-)
      AND C1=C2
      AND N=COUNT(P)
      AND N>5;

In step 2 of figure 5, a rule 411b is created with a MATCH predicate for each data source and all the constraints and aggregates are added to the rule as predicates (COMPARE, AGGREGATE, EXCEPT or EVAL). The rules for the two vertices and the two edges for the present example may be defined as follows, wherein each predicate is labelled on the right for the sake of clarity;

| | | |
|---|---|---|
| w_faculty(I,C,A) :- | | |
| | MATCH(TABLE,Person,[id:I,name:N,gender:G,birthday:B,universityld:U]) | -- F.1 |
| | MATCH(TABLE,University,[id:U,city:C]) | -- F.2 |
| | COMPARE(G,<EQUAL>,'F') | -- F.3 |
| | EVAL(A, 2019-year(B)) | -- F.4 |
| | COMPARE(A,<LESS_THAN>,30) | -- F.5 |
| paper(I,N,Y) :- | | |
| | MATCH(TABLE,Paper,[id:I,name:N,year:Y]) | -- P.1 |
| is_author(P,A) :- | | |
| | MATCH(TABLE, Authorship(idPerson:A,idPaper:P) | -- A.1 |
| is_coauthor(V,W,N) :- | | |
| | MATCH(EDGE,is_author,[person:V,paper:P]) | -- C.1 |
| | MATCH(EDGE,is_author,[person:W,paper:P]) | -- C.2 |
| | COMPARE(V,<NOT_EQUAL>,W) | -- C.3 |
| | MATCH(VERTEX,paper,[id:P,year:Y]) | -- C.4 |
| | COMPARE(Y,<GREATER_THAN_EQUAL>,2010) | -- C.5 |
| | MATCH(VERTEX,w_faculty,[id:V,city:C1]) | -- C.6 |
| | MATCH(VERTEX,w_faculty,[id:W,city:C2]) | -- C.7 |
| | COMPARE(C1,<EQUAL>,C2) | -- C.8 |
| | AGGREGATE(N,<COUNT>,P) | -- C.9 |
| | COMPARE(N,<GREATER_THAN>,5) | -- C.10 |

Then, all non-recursive MATCH and EXCEPT instructions to vertices or edges are expanded with their corresponding rule definition, excluding those with type SELF. This expansion is done recursively until all data source references in MATCH and EXCEPT are only to relational tables.

The expansion of predicates C.1, C.2, C.4, C.6 and C.7 in the rule of the new derived edge *is_coauthor* may be defined as follows, wherein he labels on the right correspond to the same labels above before the expansion:

| | | |
|---|---|---|
| is_coauthor(V,W,N) :- | | |
| | MATCH(TABLE, Authorship,[idPerson:V, idPaper:P]) | -- C.1 |
| | MATCH(TABLE, Authorship,[idPerson:W, idPaper:P]) | -- C.2 |
| | COMPARE(V,<NOT_EQUAL>,W) | -- C.3 |
| | MATCH(TABLE, Paper, [id:P,year:Y]) | -- C.4 |
| | COMPARE(Y,<GREATER_THAN_EQUAL>,2010) | -- C.5 |
| | MATCH(TABLE,Person,[id:V, gender:G1,birthday:B1,universityld:U1]) | -- C.6 |
| | MATCH(TABLE,University,[city:C1]) | |
| | COMPARE(G1,<EQUAL>,'F') | |
| | EVAL(A1, 2019-year(B1)) | |
| | COMPARE(A1,<LESS_THAN>,30) | |
| | MATCH(TABLE,Person,[id:W, gender:G2,birthday:B2,universityld:U2]) | -- C.7 |
| | MATCH(TABLE,University,[city:C2]) | |
| | COMPARE(G2,<EQUAL>,'F') | |
| | EVAL(A2, 2019-year(B2)) | |
| | COMPARE(A2,<LESS_THAN>,30) | |
| | COMPARE(C1,<EQUAL>,C2) | -- C.8 |
| | AGGREGATE(N,<COUNT>,P) | -- C.9 |
| | COMPARE(N,<GREATER_THAN>,5) | -- C.10 |

After the expansion, all redundant MATCH or EXCEPT instructions may be automatically removed in order to avoid unnecessary redundant data access to the same data sources.

In step 3 of figure 5, all the dependencies to data sources (table, vertex or edge) are validated by the RDBMS Schema Connector 413. Each data source must exist, each column (property) must exist, and each column (property) data type must be correct or there must be a proper way to coerce from the required data type to the column (property) data type.

Finally, step 4 of figure 5 only needs to convert each rule into a SQL query (SELECT statement, VIEW, CTE, UDF, or the like). For this step, it is possible to use any known technique for the conversion from logical programs to relational operators such as those used in Datalog. If the rule contains one or more recursive predicates (MATCH of type *self*), then it will require a recursive CTE, Stored Procedure or UDF. For all the other cases, a single SELECT or VIEW is enough. For multi-rule disjoint definitions (more than one rule for the same vertex or edge mapping), the UNION operator may be used to combine both results.

The final SQL statement for the new derived edge *is_coauthor* that returns an edge between all female faculty members from the same city, younger than 30 years old and that have published at least 5 papers together since 2010 may be defined as follows:

| | | |
|---|---|---|
| SELECT DISTINCT P1.id, P2.id, COUNT(*) | | |
| FROM Person P1, Person P2, | | |
| | Authorship A1, Authorship A2, | |
| | University U1, University U2, | |
| | Paper P | |
| WHERE A1.idPerson = P1.id | | -- C.1 |
| | AND A2.idPerson = P2.id | -- C.2 |
| | AND A1.idPaper = A2.idPaper | |
| | AND A1.idPerson <> A2.idPerson | -- C.3 |
| | AND P.id = A1.idPaper | -- C.4 |
| | AND P.year > 2010 | -- C.5 |
| | AND P1.id = A1.idPerson | -- C.6 |
| | AND P1.gender = 'F' | |
| | AND (2019-year(P1.birthday)) < 30 | |
| | AND P2.id = A2.idPerson | -- C.7 |
| | AND P2.gender = 'F' | |
| | AND (2019-year(P2.birthday)) < 30 | |
| | AND U1.id = P1.universityld | |
| | AND U2.id = P2.universityld | |
| | AND U1.city = U2.city | -- C.8 |
| GROUP BY P1.id, P2.id | | -- C.9 |
| HAVING COUNT(*)>5 | | -- C.9, C.10 |

The following further example includes the negation of a match as a EXCEPT:
-- employees
CREATE VERTEX employee(id I,name N,department D)
   KEY(id)
   FROM TABLE Employee(id,name,department) T_E
   AS T_E(I,N,D);

-- department
CREATE VERTEX department(id D)
   KEY(id)
   FROM TABLE Employee(department) T_E
   AS T_E(D);
-- supervisor
CREATE EDGE supervisor(departmentld D, employeeld E)
   FROM VERTEX employee(id) V_E,
      VERTEX department(id) V_D,
      TABLE Employee(id,department,isSupervisor) T_E
   OUTGOING department BY (departmentld)
   INCOMING employee BY (employeeld)
   AS T_E(E,D,S)
      AND S=true
      AND V_E(E)
      AND V_D(D);
-- co-workers that are not supervisors of the department
CREATE EDGE isCoworkerNotSupervisor(empld X, coWorkerld Y)
   FROM VERTEX employee(id,department) V_E
   OUTGOING employee BY (empld)
   INCOMING employee BY (coWorkerld)
   AS V_E(X,D)
      AND V_E(Y,D)
      AND NOT supervisor (D,Y)

The logical rules that represent the mappings for this example may be defined as follows:
employee(I,N) :-
   MATCH(TABLE, Employee, [id:I,name:N,department:D])
department(D) :-
   MATCH(TABLE, Employee, [id:D])
supervisor(D,E) :-
   MATCH(TABLE, Employee, [id:E,department:D,isSupervisor:S])
   COMPARE(S,<EQUAL>,true)
isCoworkerNotSupervisor(X,Y) :-
   MATCH(TABLE, Employee, [id:X,department:D])
   EXCEPT(TABLE, Employee, [id:Y,department:D,isSupervisor:S])
   COMPARE(S,<EQUAL>,true)

The following further example illustrates a multi-rule recursive definition based on the vertex and edge mappings introduced in the previous example.
-- supervisors of employee with level distance
CREATE EDGE isSupervisor(mngrld X, empld Y, level L)
   FROM VERTEX employee(id) V_E,
      EDGE supervisor E_S
   OUTGOING employee BY (mngrld)
   INCOMING employee BY (empld)
   AS employee(X,D)
      AND employee(Y,D)
      AND supervisor(D,X)
      AND X<>Y
      AND L=1
   OR isSupervisor(Z,Y,L1)
      AND isSupervisor(X,Z,L2)
      AND L=EVAL(L1+L2);

The logical rules that represent the mappings for this example may be defined as follows:
isSupervisor(X,Y,L) :-
   MATCH(TABLE, Employee, [id:Y,department:D])
   MATCH(TABLE, Employee, [id:X,department:D,isSupervisor:S])
   COMPARE(S,<EQUAL>,true)
   EVAL(L,1)
isSupervisor(X,Y,L) :-
   MATCH(SELF, isSupervisor, [mngrld:Z,empld:Y,level:L1])
   MATCH(SELF, isSupervisor, [mngrld:X,empld:Z,level:L2])
   EVAL(L,L1+I2)

As will be appreciated, all rules for the same mapping should have the same signature (output arguments in number and data type). In this case, the expected SQL query may be a recursive CTE, Stored Procedure or UDF.

Once the SQL query has been created, then the schema mapping engine 411 only needs to register it into the catalog 405a of the database 405 by calling again to the database 405. Subsequently, the graph query engine 407 may use those SQL queries to solve graph queries that include those new vertices and edges.

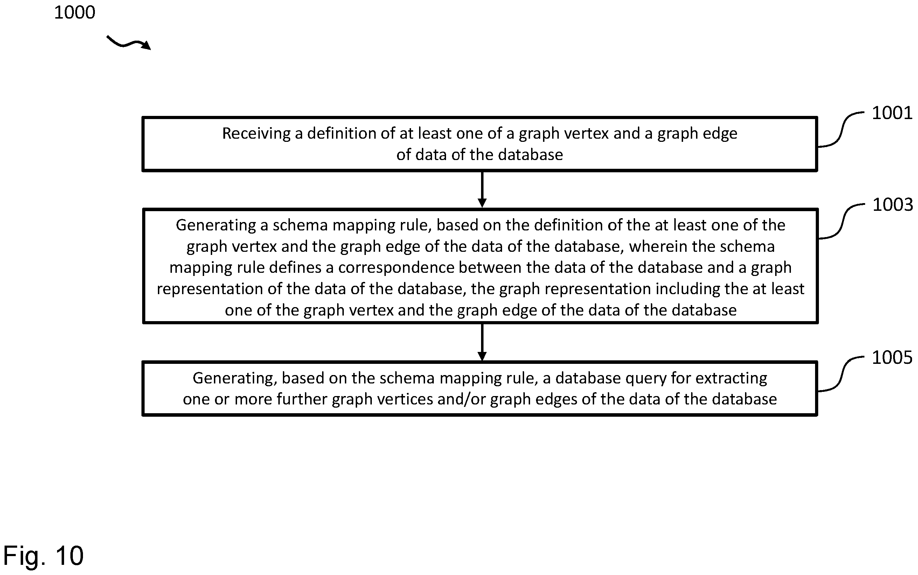

Figure 10 is a flow diagram of a method 1000 for managing a database 405. The method 1000 comprises the following steps.

In a step 1001, a definition of at least one of a graph vertex and a graph edge of data 405b of the database 405 is received. In a step 1003, a schema mapping rule 411b is generated based on the received definition of the at least one of the graph vertex and the graph edge of the data 405b of the database 405. The schema mapping rule 411b defines a correspondence between the data 405b of the database 405, e.g. tables or rows of the database 405, and a graph representation of the data 405b of the database 405. The graph representation of the data 405b of the database 405 includes the at least one of the graph vertex and the graph edge of the data 405b of the database 405. In a step 1005, based on the generated schema mapping rule 411b, a database query 411e is generated for extracting one or more further graph vertices and/or graph edges of the data 405b of the database 405.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. A database management system (400) for managing a database (405), the database management system (400) comprising a processor (400a, 411) configured to:
receive a definition of at least one of a graph vertex and a graph edge of data (405b) of the database (405);
generate a schema mapping rule (411b), based on the definition of the at least one of the graph vertex and the graph edge of the data (405b) of the database (405), wherein the schema mapping rule (411b) defines a correspondence between the data (405b) of the database (405) and a graph representation of the data (405b) of the database (405), the graph representation including the at least one of the graph vertex and the graph edge of the data (405b) of the database (405); and
generate, based on the schema mapping rule (411b), a database query (411e) for extracting one or more further graph vertices and/or graph edges of the data (405b) of the database (405),
wherein the processor (400a, 411) is further configured to store the database query (411e) in a database catalog (405a) of the database (405),
wherein the processor (400a, 407) is further configured to extract the one or more further graph vertices and/or graph edges of the data (405b) of the database (405) based on the database query (411e) stored in the database catalog (405a),
wherein the processor (400a, 411) is further configured to provide a programming interface, wherein the programming interface is configured to receive one or more programming instructions for at least one of extracting the data (405b) from the database (405) and defining the at least one of the graph vertex and the graph edge of the data (405b) of the database (405),
wherein the one or more programming instructions of the programming interface comprise a first programming instruction for extracting the data (405b) from the database (405) or from the graph representation of the data (405b) of the database (405),
wherein the first programming instruction for extracting the data (405b) from the database (405) is configured to define the at least one of the graph vertex and the graph edge of the data (405b) of the database (405) by recursive reference to the schema mapping rule (411b).

2. The database management system (400) of claim 1, wherein the processor (400a, 411) is further configured to generate the schema mapping rule (411b) as a conjunctive or disjunctive combination of one or more predicates.

3. The database management system (400) of any one of claims 1 to 2, wherein the one or more programming instructions of the programming interface comprise a second programming instruction for filtering the data (405b) of the database (405) on the basis of one or more comparison predicates.

4. The database management system (400) of any one of claims 1 to 3, wherein the one or more programming instructions of the programming interface comprise a third programming instruction for determining one or more aggregate functions over the data (405b) of the database (405).

5. The database management system (400) of any one of claims 1 to 4, wherein the one or more programming instructions of the programming interface comprise a fourth programming instruction for discarding or filtering the data (405b) of the database (405) matching one or more criteria.

6. The database management system (400) of any one of claims 1 to 5, wherein the one or more programming instructions of the programming interface comprise a fifth programming instruction for evaluating one or more predefined functions or predicates.

7. The database management system (400) of any one of the preceding claims, wherein the database management system (400) further comprises the database (405).

8. A method (1000) for managing a database (405), comprising:
receiving (1001) a definition of at least one of a graph vertex and a graph edge of data (405b) of the database (405);
generating (1003) a schema mapping rule (411b), based on the definition of the at least one of the graph vertex and the graph edge of the data (405b) of the database (405), wherein the schema mapping rule (411b) defines a correspondence between the data of the database (405) and a graph representation of the data of the database (405), the graph representation including the at least one of the graph vertex and the graph edge of the data (405b) of the database (405);
generating (1005), based on the schema mapping rule (411b), a database query (411e) for extracting one or more further graph vertices and/or graph edges of the data (405b) of the database (405);
storing the database query (411e) in a database catalog (405a) of the database (405);
extracting the one or more further graph vertices and/or graph edges of the data (405b) of the database (405) based on the database query (411e) stored in the database catalog (405a); and
providing a programming interface, wherein the programming interface is configured to receive one or more programming instructions for at least one of extracting the data (405b) from the database (405) and defining the at least one of the graph vertex and the graph edge of the data (405b) of the database (405),
wherein the one or more programming instructions of the programming interface comprise a first programming instruction for extracting the data (405b) from the database (405) or from the graph representation of the data (405b) of the database (405),
wherein the first programming instruction for extracting the data (405b) from the database (405) is configured to define the at least one of the graph vertex and the graph edge of the data (405b) of the database (405) by recursive reference to the schema mapping rule (411b).

9. The method (1000) of claim 8, wherein generating (1001) the schema mapping rule (411b) comprises generating the schema mapping rule (411b) as a conjunctive or disjunctive combination of one or more predicates.

10. A computer program product storing program code which causes a computer or a processor to perform the method (1000) of any one of claims 8 to 9, when the program code is executed by the computer or the processor.

## Patentansprüche

1. Datenbankverwaltungssystem (400) zum Verwalten einer Datenbank (405), wobei das Datenbankverwaltungssystem (400) einen Prozessor (400a, 411) umfasst, der ausgelegt ist zum:
Empfangen einer Definition mindestens einer von einer Graphenecke und einer Graphenkante von Daten (405b) der Datenbank (405);
Generieren einer Schemazuordnungsregel (411b) basierend auf der Definition der mindestens einen von der Graphenecke und der Graphenkante der Daten (405b) der Datenbank (405), wobei die Schemazuordnungsregel (411b) eine Entsprechung zwischen den Daten (405b) der Datenbank (405) und einer Graphendarstellung der Daten (405b) der Datenbank (405) definiert, wobei die Graphendarstellung die mindestens eine von der Graphenecke und der Graphenkante der Daten (405b) der Datenbank (405) umfasst; und
Generieren, basierend auf der Schemazuordnungsregel (411b), einer Datenbankabfrage (411e) zum Extrahieren einer oder mehrerer weiterer Graphenecken und/oder Graphenkanten der Daten (405b) der Datenbank (405),
wobei der Prozessor (400a, 411) ferner dazu ausgelegt ist, die Datenbankabfrage (411e) in einem Datenbankkatalog (405a) der Datenbank (405) zu speichern,
wobei der Prozessor (400a, 407) ferner dazu ausgelegt ist, die eine oder die mehreren weiteren Graphenecken und/oder Graphenkanten der Daten (405b) der Datenbank (405) basierend auf der im Datenbankkatalog (405a) gespeicherten Datenabfrage (411e) zu extrahieren,
wobei der Prozessor (400a, 411) ferner dazu ausgelegt ist, eine Programmierschnittstelle bereitzustellen, wobei die Programmierschnittstelle dazu ausgelegt ist, eine oder mehrere Programmieranweisungen für mindestens eines von dem Extrahieren der Daten (405b) aus der Datenbank (405) und dem Definieren der mindestens einen von der Graphenecke und der Graphenkante der Daten (405b) der Datenbank (405) zu empfangen,
wobei die eine oder die mehreren Programmieranweisungen der Programmierschnittstelle eine erste Programmieranweisung zum Extrahieren der Daten (405b) aus der Datenbank (405) oder aus der Graphendarstellung der Daten (405b) der Datenbank (405) umfassen,
wobei die erste Programmieranweisung zum Extrahieren der Daten (405b) aus der Datenbank (405) dazu ausgelegt ist, die mindestens eine von der Graphenecke und der Graphenkante der Daten (405b) der Datenbank (405) durch rekursive Bezugnahme auf die Schemazuordnungsregel (411b) zu definieren.

2. Datenbankverwaltungssystem (400) nach Anspruch 1, wobei der Prozessor (400a, 411) ferner dazu ausgelegt ist, die Schemazuordnungsregel (411b) als eine konjunktive oder disjunktive Kombination eines oder mehrerer Prädikate zu generieren.

3. Datenbankverwaltungssystem (400) nach einem der Ansprüche 1 oder 2, wobei die eine oder die mehreren Programmieranweisungen der Programmierschnittstelle eine zweite Programmieranweisung zum Filtern der Daten (405b) der Datenbank (405) auf der Basis eines oder mehrerer Vergleichsprädikate umfassen.

4. Datenbankverwaltungssystem (400) nach einem der Ansprüche 1 bis 3, wobei die eine oder die mehreren Programmieranweisungen der Programmierschnittstelle eine dritte Programmieranweisung zum Bestimmen einer oder mehrerer Aggregatfunktionen über die Daten (405b) der Datenbank (405) umfassen.

5. Datenbankverwaltungssystem (400) nach einem der Ansprüche 1 bis 4, wobei die eine oder die mehreren Programmieranweisungen der Programmierschnittstelle eine vierte Programmieranweisung zum Verwerfen oder Filtern der Daten (405b) der Datenbank (405) umfassen, die ein oder mehrere Kriterien erfüllen.

6. Datenbankverwaltungssystem (400) nach einem der Ansprüche 1 bis 5, wobei die eine oder die mehreren Programmieranweisungen der Programmierschnittstelle eine fünfte Programmieranweisung zum Auswerten einer oder mehrerer vordefinierter Funktionen oder eines oder mehrerer vordefinierter Prädikate umfassen.

7. Datenbankverwaltungssystem (400) nach einem der vorhergehenden Ansprüche, wobei das Datenbankverwaltungssystem (400) ferner die Datenbank (405) umfasst.

8. Verfahren (1000) zur Verwaltung einer Datenbank (405), umfassend:
Empfangen (1001) einer Definition mindestens einer von einer Graphenecke und einer Graphenkante von Daten (405b) der Datenbank (405);
Generieren (1003) einer Schemazuordnungsregel (411b) basierend auf der Definition der mindestens einen von der Graphenecke und der Graphenkante der Daten (405b) der Datenbank (405), wobei die Schemazuordnungsregel (411b) eine Entsprechung zwischen den Daten der Datenbank (405) und einer Graphendarstellung der Daten der Datenbank (405) definiert, wobei die Graphendarstellung die mindestens eine der Graphenecke und der Graphenkante der Daten (405b) der Datenbank (405) umfasst;
Generieren (1005), basierend auf der Schemazuordnungsregel (411b), einer Datenbankabfrage (411e) zum Extrahieren einer oder mehrerer weiterer Graphenecken und/oder Graphenkanten der Daten (405b) der Datenbank (405);
Speichern der Datenbankabfrage (411e) in einem Datenbankkatalog (405a) der Datenbank (405);
Extrahieren der einen oder der mehreren weiteren Graphenecken und/oder Graphenkanten der Daten (405b) der Datenbank (405) basierend auf der im Datenbankkatalog (405a) gespeicherten Datenabfrage (411e); und
Bereitstellen einer Programmierschnittstelle, wobei die Programmierschnittstelle dazu ausgelegt ist, eine oder mehrere Programmieranweisungen für mindestens eines von dem Extrahieren der Daten (405b) aus der Datenbank (405) und dem Definieren der mindestens einen von der Graphenecke und der Graphenkante der Daten (405b) der Datenbank (405) zu empfangen,
wobei die eine oder die mehreren Programmieranweisungen der Programmierschnittstelle eine erste Programmieranweisung zum Extrahieren der Daten (405b) aus der Datenbank (405) oder aus der Graphendarstellung der Daten (405b) der Datenbank (405) umfassen,
wobei die erste Programmieranweisung zum Extrahieren der Daten (405b) aus der Datenbank (405) dazu ausgelegt ist, die mindestens eine von der Graphenecke und der Graphenkante der Daten (405b) der Datenbank (405) durch rekursive Bezugnahme auf die Schemazuordnungsregel (411b) zu definieren.

9. Verfahren (1000) nach Anspruch 8, wobei das Generieren (1001) der Schemazuordnungsregel (411b) Generieren der Schemazuordnungsregel (411b) als eine konjunktive oder disjunktive Kombination eines oder mehrerer Prädikate umfasst.

10. Computerprogrammprodukt, das Programmcode speichert, der einen Computer oder einen Prozessor zum Durchführen des Verfahrens (1000) nach einem der Ansprüche 8 bis 9 veranlasst, wenn der Programmcode von dem Computer oder dem Prozessor ausgeführt wird.

## Revendications

1. Système de gestion de base de données (400) pour gérer une base de données (405), le système de gestion de base de données (400) comprenant un processeur (400a, 411) configuré pour :
recevoir une définition d'au moins un sommet de graphe et/ou bord de graphe de données (405b) de la base de données (405) ;
générer une règle de mise en correspondance de schéma (411b), sur la base de la définition de l'au moins un sommet de graphe et/ou bord de graphe des données (405b) de la base de données (405), la règle de mise en correspondance de schéma (411b) définissant une correspondance entre les données (405b) de la base de données (405) et une représentation sous forme de graphe des données (405b) de la base de données (405), la représentation sous forme de graphe comprenant l'au moins un sommet de graphe et/ou bord de graphe des données (405b) de la base de données (405) ; et
générer, sur la base de la règle de mise en correspondance de schéma (411b), une requête de base de données (411e) pour extraire un ou plusieurs autres sommets de graphe et/ou bords de graphe des données (405b) de la base de données (405),
le processeur (400a, 411) étant en outre configuré pour stocker la requête de base de données (411e) dans un catalogue de base de données (405a) de la base de données (405),
le processeur (400a, 407) étant en outre configuré pour extraire le ou les autres sommets de graphe et/ou bords de graphe des données (405b) de la base de données (405) sur la base de la requête de base de données (411e) stockée dans le catalogue de base de données (405a),
le processeur (400a, 411) étant en outre configuré pour fournir une interface de programmation, l'interface de programmation étant configurée pour recevoir une ou plusieurs instructions de programmation pour au moins l'une de l'extraction des données (405b) de la base de données (405) et de la définition de l'au moins un sommet de graphe et/ou bord de graphe des données (405b) de la base de données (405),
la ou les instructions de programmation de l'interface de programmation comprenant une première instruction de programmation pour extraire les données (405b) de la base de données (405) ou de la représentation sous forme de graphe des données (405b) de la base de données (405),
la première instruction de programmation pour extraire les données (405b) de la base de données (405) étant configurée pour définir l'au moins un sommet de graphe et/ou bord de graphe des données (405b) de la base de données (405) par référence récursive à la règle de mise en correspondance de schéma (411b).

2. Système de gestion de base de données (400) selon la revendication 1, le processeur (400a, 411) étant en outre configuré pour générer la règle de mise en correspondance de schéma (411b) sous forme d'une combinaison conjonctive ou disjonctive d'un ou plusieurs prédicats.

3. Système de gestion de base de données (400) selon l'une quelconque des revendications 1 et 2, la ou les instructions de programmation de l'interface de programmation comprenant une deuxième instruction de programmation pour filtrer les données (405b) de la base de données (405) sur la base d'un ou plusieurs prédicats de comparaison.

4. Système de gestion de base de données (400) selon l'une quelconque des revendications 1 à 3, la ou les instructions de programmation de l'interface de programmation comprenant une troisième instruction de programmation pour déterminer une ou plusieurs fonctions d'agrégation sur les données (405b) de la base de données (405).

5. Système de gestion de base de données (400) selon l'une quelconque des revendications 1 à 4, la ou les instructions de programmation de l'interface de programmation comprenant une quatrième instruction de programmation pour écarter ou filtrer les données (405b) de la base de données (405) correspondant à un ou plusieurs critères.

6. Système de gestion de base de données (400) selon l'une quelconque des revendications 1 à 5, la ou les instructions de programmation de l'interface de programmation comprenant une cinquième instruction de programmation pour évaluer un ou plusieurs fonctions ou prédicats prédéfinis.

7. Système de gestion de base de données (400) selon l'une quelconque des revendications précédentes, le système de gestion de base de données (400) comprenant en outre la base de données (405).

8. Procédé (1000) de gestion d'une base de données (405), comprenant :
la réception (1001) d'une définition d'au moins un sommet de graphe et/ou bord de graphe des données (405b) de la base de données (405) ;
la génération (1003) d'une règle de mise en correspondance de schéma (411b), sur la base de la définition de l'au moins un sommet de graphe et/ou bord de graphe des données (405b) de la base de données (405), la règle de mise en correspondance de schéma (411b) définissant une correspondance entre les données de la base de données (405) et une représentation graphique des données de la base de données (405), la représentation graphique comprenant l'au moins un sommet de graphe et/ou bord de graphe des données (405b) de la base de données (405) ;
la génération (1005), sur la base de la règle de mise en correspondance de schéma (411b), d'une requête de base de données (411e) pour extraire un ou plusieurs autres sommets de graphe et/ou bords de graphe des données (405b) de la base de données (405) ;
le stockage de la requête de base de données (411e) dans un catalogue de base de données (405a) de la base de données (405) ;
l'extraction du ou des autres sommets de graphe et/ou bords de graphe des données (405b) de la base de données (405) sur la base de la requête de base de données (411e) stockée dans le catalogue de base de données (405a), et
la fourniture d'une interface de programmation, l'interface de programmation étant configurée pour recevoir une ou plusieurs instructions de programmation pour au moins extraire les données (405b) de la base de données (405) et/ou définir l'au moins un sommet de graphe et/ou bord de graphe des données (405b) de la base de données (405),
la ou les instructions de programmation de l'interface de programmation comprenant une première instruction de programmation pour extraire les données (405b) de la base de données (405) ou de la représentation graphique des données (405b) de la base de données (405),
la première instruction de programmation pour extraire les données (405b) de la base de données (405) étant configurée pour définir l'au moins un sommet de graphe et/ou bord de graphe des données (405b) de la base de données (405) par référence récursive à la règle de mise en correspondance de schéma (411b).

9. Procédé (1000) selon la revendication 8, la génération (1001) de la règle de mise en correspondance de schéma (411b) comprenant la génération de la règle de mise en correspondance de schéma (411b) en tant que combinaison conjonctive ou disjonctive d'un ou plusieurs prédicats.

10. Produit de programme informatique stockant un code de programme qui amène un ordinateur ou un processeur à réaliser le procédé (1000) selon l'une quelconque des revendications 8 et 9, lorsque le code de programme est exécuté par l'ordinateur ou le processeur.
